# EUROPEAN PATENT APPLICATION

(11) **EP 1 944 114 A1**
(43) Date of publication of application: **16.07.2008**
(21) Application number: 08100365.9
(22) Date of filing: 11.01.2008
(51) Int. Cl.: B23K 9/02, B23K 9/12, B23K 9/173

(54) **Apparatus for and method of deep groove welding for increasing welding speed**

(30) Priority: 11.01.2007 US 652283
(71) Applicant: General Electric Company, Schenectady, NY 12345 (US)
(72) Inventor: SPIEGEL, Lyle B., Niskayuna, NY 12309 (US); ELLIS, Edward Kenneth, Brewer, ME 04412 (US); CHILDS, JR., William Harold, Bangor, ME 04401 (US); BURKE, Peter Robert, Glenburn, ME 04401 (US)
(74) Representative: Illingworth-Law, William Illingworth

(57) **Abstract**

A welding apparatus (100) and a method of increasing welding speed are disclosed. The welding apparatus (100) includes a torch body (110) comprising at least one core (140), a plurality of contact tips (115,120) extending in a direction from the at least one core (140), and a plurality of gas supply tubes (130,135) disposed proximate the plurality of contact tips (115,120), the plurality of gas supply tubes (130,135) extending in a substantially similar direction as the plurality of contact tips (115,120).

## Description

### BACKGROUND OF THE INVENTION

The present disclosure relates generally to welding, and particularly to deep groove welding.

Gas metal arc welding, including metal inert gas (MIG) welding employs a consumable wire electrode, also herein referred to as a wire electrode, an electrical supply, and a system for directing a shielding gas to a weld area. The wire electrode and the shielding gas are continuously fed through a "torch" in electrical connection with the electrical supply into the weld area. A workpiece is connected by an earth lead that completes a circuit with the electrical supply. The wire electrode is held at a potential above ground using a power source capable of supplying an appropriate amount of current to produce an arc. When the wire electrode touches the workpiece, the arc is formed, which melts localized metal of the workpiece and the wire electrode, forming a molten pool, which subsequently cools to form a weld. The shielding gas protects the molten pool from oxidation and provides at least one desired arc characteristic.

A common manner to increase welding speed is to increase a feed rate of the wire electrode, with a corresponding increase in current to melt a corresponding amount of additional wire electrode. However, excessive heat generation, resulting from the corresponding increase in current, can lead to undesired distortion of the workpiece. MIG welding using two wires, sometimes referred to as twin wire welding, also can increase welding speed, thereby enhancing productivity. However, twin wire welding in close proximity, using a single conventional power supply, is unsuitable for applications such as deep narrow groove welding due to instability of the arc, metal transfer associated with interaction of adjacent magnetic fields, and variations in an energy of the arc corresponding to each wire electrode. Prior attempts to provide process requirements of wire electrode cooling and delivery of the shielding gas have resulted in twin wire welding torches that are not compatible with narrow deep grooves, such as those used in the production of steam turbine components, for example.

Accordingly, there is a need in the art for a deep groove welding arrangement that overcomes these drawbacks.

### BRIEF DESCRIPTION OF THE INVENTION

An embodiment of the invention includes a welding apparatus. The welding apparatus includes a torch body comprising at least one core, a plurality of contact tips extending in a direction from the at least one core, and a plurality of gas supply tubes disposed proximate the plurality of contact tips, the plurality of gas supply tubes extending in a substantially similar direction as the plurality of contact tips.

Another embodiment of the invention includes a method of increasing welding speed using a welding apparatus having a torch body with at least one core, a plurality of contact tips extending in a first direction from the at least one core, and a plurality of gas supply tubes disposed proximate the plurality of contact tips, the gas supply tubes extending in a substantially similar direction as the plurality of contact tips. The method includes defining at least one of the plurality of contact tips as a leading contact tip and at least one other of the plurality of contact tips as a trailing contact tip, moving the welding apparatus in a second direction, and controlling at least one of the leading contact tip and the trailing contact tip independent of the other to increase welding speed.

These and other advantages and features will be more readily understood from the following detailed description of preferred embodiments of the invention provided by way of example that are provided in connection with the accompanying drawings.

### BRIEF DESCRIPTION OF THE DRAWINGS

Referring to the exemplary drawings wherein like elements are numbered alike in the accompanying Figures:

Figure 1 depicts a top perspective exploded component view of a welding torch in accordance with an embodiment of the invention;

Figure 2 depicts a perspective view of a tip end of the torch in accordance with an embodiment of the invention; and

Figure 3 depicts a schematic side view of a tooling arrangement including the torch in accordance with an embodiment of the invention.

### DETAILED DESCRIPTION OF THE INVENTION

An embodiment of the invention will provide a torch and a process for narrow groove MIG welding using two wire electrodes fed into a common molten pool of weld material. The torch is capable of operation in a narrow groove to reduce required welding time compared to presently used single wire electrode MIG welding systems. In an embodiment, the process facilitates improved welding productivity due to higher welding speeds and higher deposition rates of the wire electrodes. In an embodiment, each wire electrode is connected to its own power supply to enable independent adjustment of a welding voltage, a current level, and a welding power delivery waveform, such as continuous or pulse modulated power delivery waveforms, for example.

In an embodiment, a composition of deposited metal can be customized by independently varying at least one of a wire electrode diameter, alloy content, and feed rate for each of two separate contact tips, to result in improved metallurgical and mechanical properties. Use of the two wire electrodes will reduce a number of weld passes required, and improve productivity and weld quality by minimizing an amount of deslagging and reducing an opportunity for slag entrapment. Further, enhanced control of heat input parameters can reduce dimensional distortion.

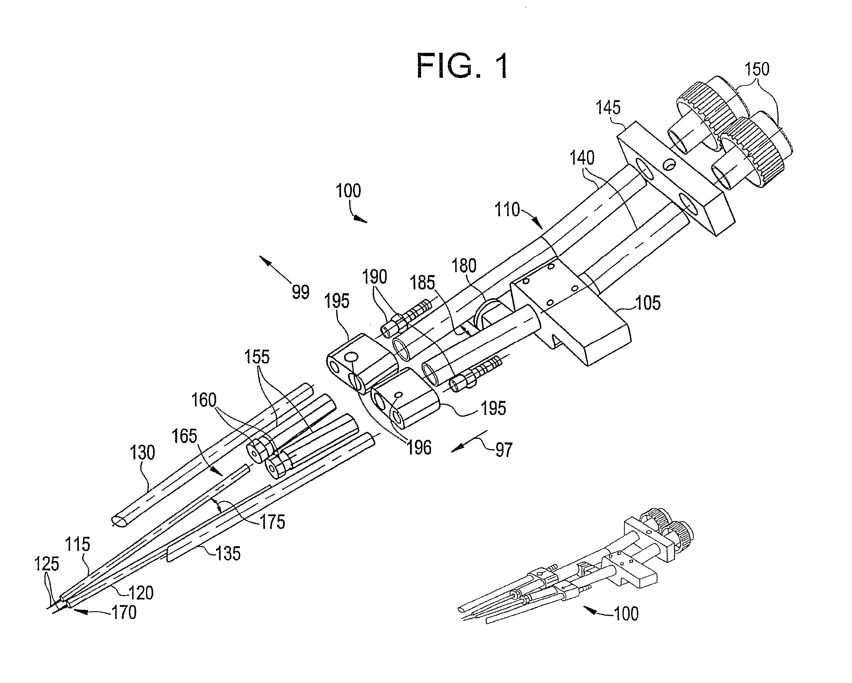

Referring now to Figure 1, a top perspective exploded component view of an embodiment of a dual wire welding torch 100, having particular utility for narrow groove welding, also herein referred to as a torch, is depicted. The torch 100 includes a mounting plate 105, a torch body 110, two contact tips 115, 120 through which a pair of consumable wires 125 are fed, and a plurality of gas supply tubes 130, 135. In an embodiment, the torch body 110 includes at least one head assembly 140, also herein referred to as a core. The at least one core 140 includes a water cooling jacket to remove heat generated by welding to prevent melting of the two contact tips 115, 120. The two contact tips 115, 120 extend forwardly from the at least one core 140 in a direction indicated by a direction line 97. In an embodiment, the torch 100 includes two gas supply tubes 130, 135.

While an embodiment has been described having two contact tips 115, 120, it will be appreciated that the scope of the invention is not so limited, and that the invention will also apply to torches 100 having a plurality of contact tips 115, 120, such as three, four, or more, for example.

An insulated head block 145 is disposed between and connects together the core 140 and at least one coupler 150. The coupler 150 is connected to external power supplies, consumable wire feeders, and water coolers (not shown). The external power supplies provide welding current, the consumable wire feeders provide a supply of the pair of consumable wires 125, and the water coolers circulate water through the water cooling jacket of the core 140, as will be appreciated by one skilled in the art.

In an embodiment, the torch body 110 includes two cores 140 and a pair of contact tip holders 155 to provide an interface between the cores 140 and the contact tips 115, 120. The pair of contact tip holders 155 extend in a first direction forwardly from the cores 140, and retain the contact tips 115, 120. The contact tip holders 155 each include an adjuster 160, such as a collet for example, to retain the contact tips 115, 120 and allow for replacement and adjustment of a length of the contact tips 115, 120 that extends beyond the adjusters 160 of the contact tip holders 155.

The contact tips 115, 120 provide welding current and positional guidance to the pair of consumable wires 125. In an embodiment, the contact tips 115, 120 are made from copper to provide beneficial electrical conductivity from the power source to the pair of consumable wires 125 and thermal conductivity via the contact tip holders 155 to the water cooling jacket of the core 140. In an embodiment, the contact tips 115, 120 have a diameter of about 1/4 inch to facilitate disposition into narrow grooves. In an embodiment, the contact tips 115, 120 extend at least four inches beyond at least one of the pair of contact tip holders 155. In another embodiment, the contact tips 115, 120 extend at least six inches beyond at least one of the pair of contact tip holders 155. In yet another embodiment, the contact tips 115, 120 extend at least eight inches beyond at least one of the pair of contact tip holders 155.

Insulation is disposed upon the exterior of, or surrounds each contact tip 115, 120, and extends from a rear end 165 (disposed within a respective one of the pair tip of contact tip holders 155) toward a most forward end 170, also herein referred to as a tip, 170 of each contact tip 115, 120. The insulation extends from the rear end 165 toward the tip 170 of each contact tip 115, 120 to thermally and electrically insulate each contact tip 115, 120 from the other, and the workpiece. In an embodiment, the insulation includes at least one of a woven glass sleeve, and a varnish such as may be used for transformer laminations, for example. In another embodiment, the insulation includes a ceramic coating.

In an embodiment, the torch 100 provides a positioning angle 175 included between the contact tips 115, 120. An adjuster 180 also allows physical adjustment of a relative position, or orientation of the two contact tips 115, 120 via adjustment of the positioning angle 175. In an embodiment, the adjuster 180 adjusts the positioning angle by altering a separation distance 185 between the two cores 140.

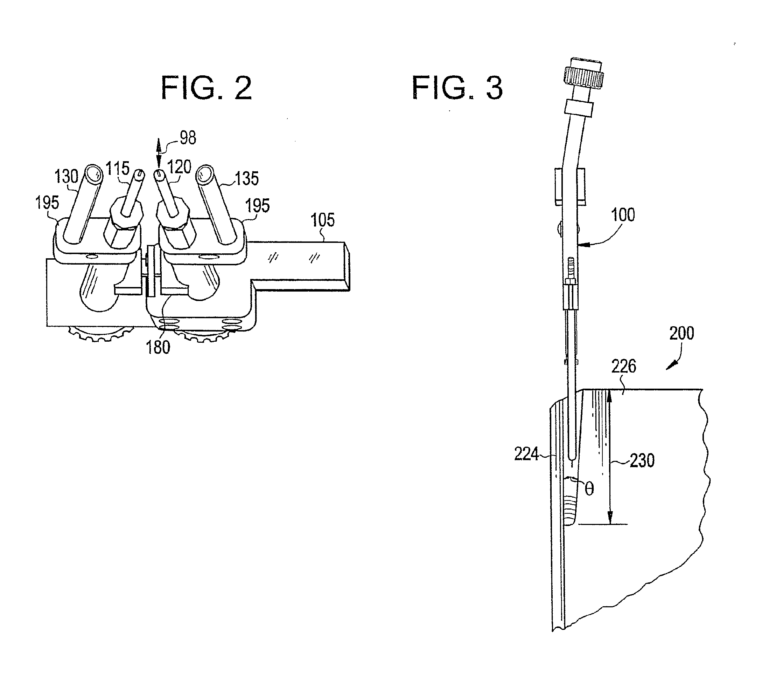

Referring now to Figure 2, a perspective view of the tip 170 end of the torch 100 is depicted. It is contemplated that an embodiment of the adjuster 180 provides translation of one contact tip 115, 120 relative to the other in an offset direction, as indicated by a direction line 98.

Referring back now to Figure 1, the shielding gas is supplied by the gas supply tubes 130, 135 via a coupling 190, such as a fitting or nipple, for example. The shielding gas cools the tip 170 of each of the contact tips 115, 120 and provides suitable shielding to maintain stability of the arcs, and to prevent oxidation of the molten pool of weld material. Use of more than one gas supply tube 130, 135 allows custom mixing of more than one shielding gas in close proximity to the molten pool of weld material to improve welding characteristics. In an embodiment, the gas supply tubes 130, 135 are separate from the contact tips 115, 120, and project forwardly from at least one gas block 195 that is in mechanical connection intermediate the pair of contact tip holders 155 and the at least one core 140. The gas supply tubes 130, 135 project in a direction substantially similar to the contact tips 115, 120 such that the gas supply tubes 130, 135 and the contact tips 115, 120 are capable to be disposed within a single groove, as described further below, and depicted in Figure 3. In an embodiment, the gas supply tubes 130, 135 are disposed along opposite sides of the torch 100, external of the two contact tips 115, 120. Stated alternatively, the contact tips 115, 120 are disposed between the gas supply tubes 130, 135. In an embodiment, the gas supply tubes 130, 135 are about 3/8 inch in diameter.

With reference to Figure 1 in conjunction with Figure 2, the gas supply tubes 130, 135 are substantially parallel to the two contact tips 115, 120, such that the gas supply tubes 130, 135 and the contact tips 115, 120 are capable to be disposed within a single groove, as described further below, and depicted in Figure 3. In an embodiment, the gas supply tubes 130, 135 are each secured to the gas block 195 via an adjuster 196, such as a set screw or a clamp, for example. Adjustment of the positioning angle 175 included between the two contact tips 115, 120 will result in a likewise change in an angle included between the gas supply tubes 130, 135. Adjustment of an orientation of at least one of the gas supply tubes 130, 135 is accomplished by loosening the adjuster 196, to allow for at least one of rotation of the gas block 195 and translation of the gas supply tube 130, 135 relative to the gas block 195. Rotation of the gas block 195 about the core 140 provides translation of the corresponding gas supply tube 130, 135 relative to the two contact tips 115, 120 in the offset direction 98. Translation of the gas supply tube 130, 135 relative to the gas block 195 provides adjustment of a length of the gas supply tube 130, 135 relative to the two contact tips 115, 120.

While an embodiment has been depicted with the gas supply tubes 130, 135 having a circular profile, it will be appreciated that the scope of the invention is not so limited, and will also apply to torches 100 having the gas supply tubes 130, 135 including alternate profile geometry, such as oval, elliptical, and rectangular, having a profile dimension of about 3/8 inch in a direction which is substantially perpendicular to movement of the torch 100 in a welding operation, for example. While an embodiment has been described as having the gas block 195 that positions the gas supply tubes 130, 135 substantially parallel in relation to the two contact tips 115, 120, it will be appreciated that the scope of the invention is not so limited, and that the invention will also apply to torches 100 having other mounting means that may position the gas supply tubes 130, 135 at other angles, such as generally approaching or departing from the two contact tips 115, 120, for example.

It will be appreciated by one skilled in the art that as each consumable wire of the pair of consumable wires 125 passes through the tip 170 of each of the contact tips 115, 120, a localized wearing at a most forward position of the tip 170 of the contact tips 115, 120 results. The localized wearing is caused by guidance forces that act upon each consumable wire of the pair of consumable wires 125 as they extend, in a cantilevered manner, beyond the tip 170 of the contact tip 115, 120. Furthermore, this wear is accelerated by the high temperatures present at the tip 170 of the contact tips 115, 120. As a result of the wearing of the tip 170, an inner diameter at the most forward portion of the tip 170 becomes larger. An increase of the inner diameter of the tip 170 is undesirable, as it increases an amount of clearance between the inner diameter of the tip 170 and a corresponding one of the pair of consumable wires 125, thereby reducing an accuracy of positional guidance of the corresponding one of the pair of consumable wires 125 by the tip 170. The increase of the inner diameter of the tip 170 will also change at least one characteristic of the arc as a result of a change in a conduction path of current from the two contact tips 115, 120 to each of the corresponding one of the pair of consumable wires 125. Removal of a most forward (and most worn) portion of the tip 170 of at least one of the two contact tips 115, 120 will, in essence, provide a respective new tip 170, including a less worn inner diameter to provide increased positional guidance accuracy and enhanced current conduction path consistency to the corresponding one of the pair of consumable wires 125. Accordingly, use of the adjuster 160 to quickly remove the contact tip 115, 120 from the contact tip holder 155 will allow for expedient removal of the most forward portion of the tip 170 to provide consistent wire guidance and current conduction path related arc characteristics, while maintaining an appropriate relative position between the two tips 170. Further, such removal of the most forward portion of the tip 170 extends an overall useful life of the two contact tips 115, 120 and torch 100 service intervals.

Referring now to Figure 3, a schematic side view of a tooling arrangement 200 including the torch 100 is depicted. In an embodiment, the torch 100 is used to weld a steam turbine diaphragm band 224 to a steam turbine diaphragm web 226. Two parameters of the tooling arrangement 200 include a groove angle θ and a groove depth 230. The torch 100 disclosed herein is suitable for welding within the groove depth 230 of up to about 12 inches including the groove angle θ as small as 3 degrees. It will be appreciated that the foregoing example is for purposes of illustration and not limitation.

Effects of magnetic fields resulting from current flow produced by a welding process can influence at least one characteristic of the arc. These effects, as well as challenges relating to delivery of shielding gas, are intensified within deep narrow grooves, such as those between the band 224 and web 226, and increase the difficulty of welding within such grooves. Further, a difference in size between the band 224 and the web 226 creates an imbalance with respect to an ability of the band 224 and the web 226 to absorb heat. A common manner of increasing throughput via welding speed is to increase a feed rate of the wire electrode with a corresponding increase in weld current to melt additional metal provided by the increased feed rate. However, an imbalance in heat absorption capacity often leads to distortion of a smaller part if welding speed is attempted to be increased via an increased weld current that produces an excessive amount of applied heat. Accordingly, careful control of heat input via weld parameter selection will reduce distortion.

In response to a translation of the torch 100, in a second direction as shown by a direction line 99, in Figure 1, (into the plane of the page of Figure 3), contact tip 115 will be defined as a leading contact tip and contact tip 120 will be defined as a trailing contact tip. Translation of the torch 100 in the direction shown by the direction line 99 is defined as a motion substantially coplanar to the two contact tips 115, 120. It will be appreciated that in response to translation of the torch 100 in the direction opposite to direction line 99, contact tip 120 will be defined as the leading contact tip, and contact tip 115 will be defined as the trailing contact tip.

It has been found that characteristics of the arc and weld quality are enhanced via selection of various welding parameters. Customization of welding parameters, or controlling each of the two contact tips 115, 120, independent of the other contact tip 115, 120 has been found to increase material deposition rates, welding speeds, enhance overall weld quality, and to avoid excessive distortion. For example, it has been discovered that use of what is referred to in the art as a synergic control algorithm, wherein at least one other welding parameter, such as welding current, welding voltage, and welding power delivery waveform, for example, is responsive to changes in the feed rate of the corresponding one of the pair of consumable wires 125, is preferred for use with the leading contact tip. It has also been discovered that a pulsing control algorithm, in which the welding current is pulsed, or rapidly alternated from an off state to an on state, independent of the feed rate of a corresponding one of the pair of consumable wires 125 consumable wire feed rate is preferred for use with the trailing contact tip. Further, it has been discovered that a greater feed rate of a corresponding one of the pair of consumable wires 125 is preferred for the leading contact tip, as compared with the trailing contact tip. In an embodiment, an increase in welding speed facilitated by use of the torch 100 will reduce the distortion as a result of a reduction in an overall heat input rate.

Tests utilizing the disclosed dual wire arrangement have been performed upon steam turbine diaphragms with five inch deep, three degree grooves. Use of the torch 100 and welding parameters, as disclosed herein, have provided acceptable welds with about twice the welding speed of a single wire process adapted for such narrow, deep grooves.

In view of the foregoing, the torch 100 facilitates a method of increasing welding speed in narrow grooves. The method includes defining one of the two contact tips 115, 120 as the leading contact tip and the other of the two contact tips 115, 120 as the trailing contact tip, moving the torch 100 in the second direction indicated by direction line 99, substantially coplanar to the two contact tips 115, 120, and controlling at least one of the leading contact tip and the trailing contact tip independent of the other to increase welding speed.

An embodiment of the method includes applying the synergic control algorithm to the leading contact tip. Another embodiment of the method includes applying the pulsing control algorithm to the trailing contact tip.

In an embodiment, the controlling at least one of the leading and the trailing contact tip independent of the other includes controlling at least one of a diameter of each of the pair of consumable wire electrodes 125, a feed rate of each of the pair of consumable wire electrodes 125, a composition of each of the pair of consumable wire electrodes 125, a magnitude of welding voltage applied to each of the pair of consumable wire electrodes 125, a magnitude of welding current applied to each of the pair of consumable wire electrodes 125, and a waveform of welding power delivery applied to each of the pair of consumable wire electrodes 125. In an embodiment, the feed rate of consumable wire electrode corresponding to the leading contact tip is greater than the feed rate of consumable wire electrode corresponding to the trailing contact tip.

As disclosed, some embodiments of the invention may include some of the following advantages: an ability to achieve higher weld material deposition rates within deep narrow grooves; an ability to control heat input to reduce workpiece distortion; an ability to enhance weld quality by reducing a potential for slag entrapment; an ability to reduce manufacturing process costs by increasing productivity; an ability to provide customized weld material including precisely controlled chemistry including unique metallurgical and mechanical properties; an ability to reduce an overall heat input rate; and an ability to mix together more than one shielding gas in close proximity to the molten pool of weld material to improve welding characteristics.
While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best or only mode contemplated for carrying out this invention, but that the invention will include all embodiments falling within the scope of the appended claims. Also, in the drawings and the description, there have been disclosed exemplary embodiments of the invention and, although specific terms may have been employed, they are unless otherwise stated used in a generic and descriptive sense only and not for purposes of limitation, the scope of the invention therefore not being so limited. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item.

## Claims

1. A welding apparatus comprising:
a torch body (110) comprising at least one core (140);
a plurality of contact tips (115) (120) extending in a direction from the at least one core (140); and
a plurality of gas supply tubes (130) (135) disposed proximate the plurality of contact tips (115) (120), the plurality of gas supply tubes (130) (135) extending in a substantially similar direction as the plurality of contact tips (115) (120).

2. The apparatus of Claim 1, wherein:
at least one of the plurality of contact tips (115) (120) is disposed between the plurality of gas supply tubes (130) (135).

3. The apparatus of Claim 1 or Claim 2, further comprising at least one of:
an adjuster (180) to adjust an orientation of at least one of the plurality of contact tips (115) (120); and
an adjuster (180) to adjust an orientation of at least one of the plurality of gas supply tubes (130) (135).

4. The apparatus of any one of the preceding Claims, wherein:
a diameter of at least one of the plurality of contact tips (115) (120) is approximately 1/4 of an inch.

5. The apparatus of Claim 4, further comprising:
a plurality of contact tip holders (155) extending from the at least one core (140), at least one of the plurality of contact tips (115) (120) extending at least four inches beyond at least one of the plurality of contact tip holders (155) .

6. The apparatus of Claim 5, wherein:
at least one of the plurality of contact tips (115) (120) extend at least eight inches beyond at least one of the plurality of contact tip holders (155).

7. The apparatus of any one of the preceding Claims, wherein:
the at least one core (140) comprises a water cooling jacket.

8. The apparatus of any one of the preceding Claims, further comprising:
insulation disposed upon the exterior of at least one of the plurality of contact tips (115) (120).

9. A method of increasing welding speed using a welding apparatus having a torch body (110) with at least one core (140), a plurality of contact tips (115) (120) extending in a first direction from the at least one core (140), and a plurality of gas supply tubes (130) (135) disposed proximate the plurality of contact tips (115) (120), the gas supply tubes (130) (135) extending in a substantially similar direction as the plurality of contact tips (115) (120), the method comprising:
defining at least one of the plurality of contact tips (115) (120) as a leading contact tip (115) (120) and at least one other of the plurality of contact tips (115) (120) as a trailing contact tip (115) (120);
moving the welding apparatus in a second direction; and
controlling at least one of the leading contact tip (115) (120) and the trailing contact tip (115) (120) independent of the other to increase welding speed.

10. The method of Claim 9, wherein the controlling comprises:
controlling a consumable wire feed rate of the leading contact tip (115) (120) to be greater than a consumable wire feed rate of the trailing contact tip (115) (120).
